# DEMANDE DE BREVET EUROPEEN

(11) **EP 1 736 083 A1**
(43) Date de publication de la demande: **27.12.2006**
(21) Numéro de dépôt: 06356070.0
(22) Date de dépôt: 16.06.2006
(51) Int. Cl.: A47J 27/00

(54) **Cuiseur à panier de cuisson, comportant un système pour éviter la formation de mousse**

(30) Priorité: 22.06.2005 FR 0506331
(71) Demandeur: SEB SA, 69130 Ecully (FR)
(72) Inventeur: Pellerin, Olivier, 21510 Minot (FR)
(74) Mandataire: Kiehl, Hubert

(57) **Abrégé**

- L'invention concerne un cuiseur, notamment un cuiseur à pâtes, comportant une cuve (2) prévue pour recevoir un bain de cuisson susceptible d'être porté à ébullition, un panier de cuisson (3) agencé dans la cuve (2), un couvercle (5) agencé sur le panier de cuisson (3).
- Conformément à l'invention, le couvercle (5) ménage un passage avec le panier de cuisson (3).

## Description

La présente invention concerne le domaine technique des cuiseurs comprenant un panier de cuisson agencé dans une cuve contenant un bain de cuisson susceptible d'être porté à ébullition.

La présente invention concerne notamment les cuiseurs à pâtes. La présente invention concerne les ustensiles de cuisson placés sur une source de chauffe ainsi que les appareils de cuisson électrique comportant une source de chauffe.

Lors d'une cuisson dans un bain de cuisson, certains types d'aliments, tels que les pâtes, sont susceptibles de provoquer la formation de mousse, qui peut entraîner des risques de débordement du bain de cuisson.

Un but de la présente invention est de proposer un cuiseur comportant un panier de cuisson agencé dans une cuve, et un couvercle agencé sur le panier de cuisson, dans lequel le risque de formation de mousse lors de la cuisson est limité.

Un autre but de la présente invention est de proposer un cuiseur du type précité, dans lequel le risque de débordement lors de la cuisson est limité.

Un autre but de la présente invention est de proposer un cuiseur du type précité, dont la construction soit compacte.

Un autre but de la présente invention est de proposer un cuiseur du type précité, dans lequel les projections du bain de cuisson en ébullition sont limitées.

Un autre but de la présente invention est de proposer un cuiseur du type précité, dans lequel un maintien au chaud performant peut être assuré.

Un autre but de la présente invention est de proposer un cuiseur du type précité, dans lequel la manipulation du couvercle est simple.

Un autre but de la présente invention est de proposer un cuiseur du type précité permettant une cuisson sans surveillance.

Ces buts sont atteints avec un cuiseur, notamment un cuiseur à pâtes, comportant une cuve prévue pour recevoir un bain de cuisson susceptible d'être porté à ébullition, un panier de cuisson agencé dans la cuve, un couvercle agencé sur le panier de cuisson, du fait que le couvercle ménage un passage avec le panier de cuisson. Cette disposition permet de limiter la formation de mousse ainsi que les risques de débordement du bain de cuisson. L'écoulement du bain de cuisson dans la cuve est facilité. La vapeur peut s'échapper par le passage. La hauteur de la cuve peut être limitée. La manipulation du couvercle est simple.

Avantageusement le couvercle couvre le panier de cuisson. Ainsi la vapeur produite dans le panier de cuisson peut être recueillie et condensée par le couvercle.

Avantageusement, le panier de cuisson présente un bord périphérique supérieur agencé à l'intérieur de la cuve. Cette disposition facilite la rétention dans la cuve du bain de cuisson ou de la mousse débordant du panier de cuisson.

Avantageusement le couvercle s'étend à distance d'un bord périphérique supérieur du panier de cuisson. Cette disposition permet de ménager un ou plusieurs passages présentant une section suffisante pour permettre une évacuation correcte de la vapeur, de la mousse ou du bain de cuisson débordant du panier de cuisson.

Avantageusement, le couvercle repose sur des supports issus du panier de cuisson. Le couvercle s'étend ainsi à distance du panier de cuisson et peut ménager plusieurs larges passages.

Avantageusement alors, les supports forment des moyens de préhension. Le retrait et la mise en place du panier de cuisson sont facilités.

Avantageusement encore, le couvercle présente une paroi inférieure ayant une partie périphérique inclinée vers le bas en direction de la périphérie. Cette disposition contribue à la récupération des condensats, qui peuvent en retombant diluer la mousse en formation.

Avantageusement le couvercle comporte un bord périphérique inférieur s'étendant à l'extérieur du panier de cuisson. Cette disposition permet de couvrir le panier de cuisson et de contrôler l'échappement de vapeur.

Avantageusement alors le couvercle comporte un bord périphérique inférieur descendant à l'intérieur de la cuve lorsque le couvercle est agencé sur le panier de cuisson en place dans la cuve. Cette disposition permet la récupération des condensats dans la cuve. Cette disposition contribue également à diriger dans la cuve le bain de cuisson ou la mousse débordant du panier de cuisson.

Avantageusement le couvercle comporte un corps principal présentant une ouverture supérieure et un corps secondaire prévu pour fermer l'ouverture supérieure. Cette disposition permet de faciliter l'introduction d'aliments ou de condiments lors de la cuisson.

Avantageusement encore le panier de cuisson comporte une paroi latérale perforée, pour faciliter l'égouttage des aliments et diminuer les risques de moussage et de débordement.

Selon une forme de réalisation avantageuse, la cuve est montée dans un boîtier.

Avantageusement encore la cuve est montée amovible dans le boîtier. Cette disposition permet notamment de faciliter le nettoyage de la cuve.

Avantageusement encore le panier de cuisson présente un fond ajouré, le panier de cuisson délimitant avec la cuve une chambre d'ébullition sous le fond ajouré. Cette disposition permet de favoriser l'ébullition à l'intérieur du panier de cuisson plutôt qu'autour du panier de cuisson.

Avantageusement alors, le cuiseur comporte un dispositif de maintien prévu pour bloquer le panier de cuisson dans la cuve lors de la cuisson. Cette disposition permet d'éviter que l'ébullition ne soulève le panier de cuisson lors de la cuisson. L'efficacité du remuage des aliments est fortement limitée si la vapeur peut passer ailleurs que par le fond ajouré. Un remuage efficace permet de réduire le volume du bain de cuisson.

Selon une forme de réalisation avantageuse la cuve est associée à des moyens de chauffe. Par exemple les moyens de chauffe peuvent être solidaires de la cuve ou encore être montés dans le boîtier. En alternative la cuve peut être dépourvue de moyens de chauffe et être prévue pour être placée sur une source chauffante.

Avantageusement alors, les moyens de chauffe sont agencés en dessous de la chambre d'ébullition. Cette disposition permet de porter à ébullition le bain de cuisson principalement dans le panier de cuisson, ce qui permet de diminuer la formation de mousse dans la cuve autour du panier de cuisson, et de limiter les risques de projections du bain de cuisson en ébullition ainsi que les risques de débordement du bain de cuisson.

Selon une forme de réalisation, le couvercle est supporté par le panier de cuisson. Le couvercle peut être supporté par le panier de cuisson directement ou indirectement.

Selon une autre forme de réalisation, le couvercle est monté sur un dispositif de monte et baisse du panier de cuisson.

L'invention sera mieux comprise à l'étude d'un exemple de réalisation, pris à titre nullement limitatif, illustré dans les figures annexées, dans lesquelles :
- la figure 1 est une vue schématique en éclaté d'un exemple de réalisation d'un cuiseur selon l'invention,
- la figure 2 est une vue de côté en coupe du cuiseur illustré à la figure 1,
- la figure 3 est une vue en perspective du boîtier et de la cuve du cuiseur illustré aux figures 1 et 2, le panier de cuisson, le couvercle et l'accessoire à sauces ayant été retirés,
- la figure 4 est une vue en perspective de dessus du panier de cuisson visible aux figures 1 et 2,
- la figure 5 est une vue en perspective de dessous du panier de cuisson visible aux figures 1 et 2,
- la figure 6 est une vue en perspective et en coupe du cuiseur illustré aux figures 1 et 2, le panier de cuisson étant en position relevée,
- la figure 7 est une vue en perspective et en coupe du cuiseur illustré aux figures 1, 2 et 6, le panier de cuisson étant en position abaissée,
- la figure 8 est une vue d'une partie du dispositif de détection de vapeur.

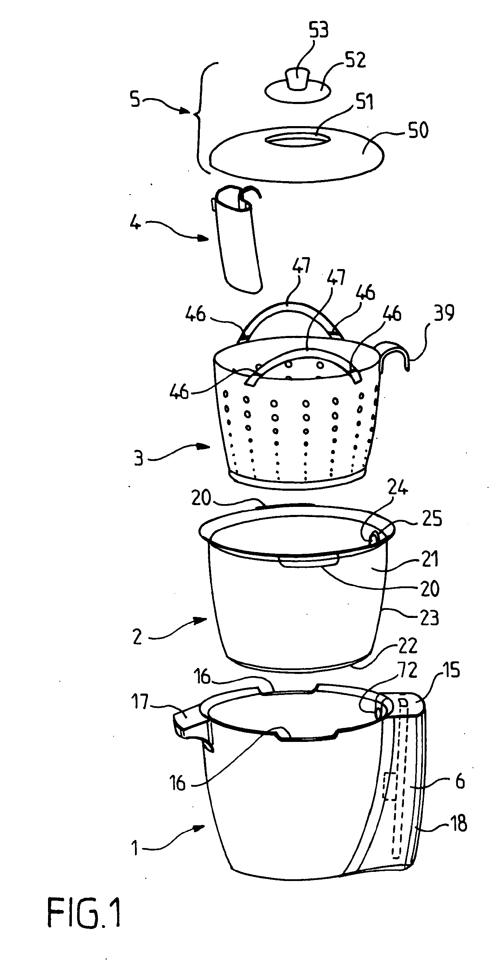

L'appareil illustré aux figures 1 à 8 est un cuiseur, notamment un cuiseur à pâtes, comportant un boîtier 1, une cuve 2, un panier de cuisson 3, un accessoire à sauces 4, et un couvercle 5.

Tel que visible sur la figure 1, le boîtier 1 forme un logement 10 prévu pour recevoir la cuve 2. Le bord supérieur du logement 10 présente des échancrures 16 prévues pour recevoir des poignées 20 de la cuve 2.

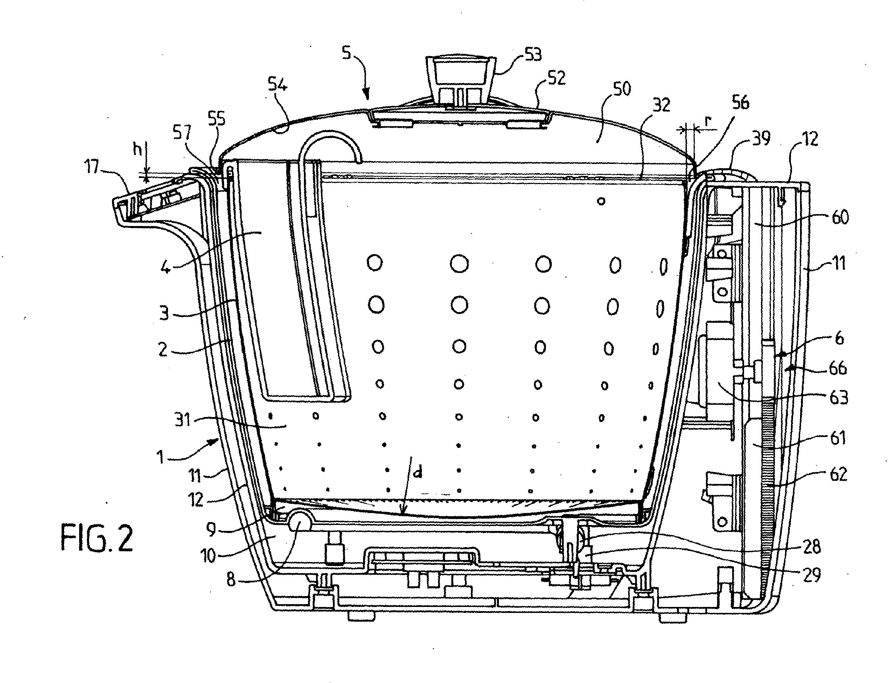

Le boîtier 1 présente une protubérance latérale supérieure 17 logeant une partie des organes de commande du cuiseur. La protubérance latérale supérieure 17 s'étend à partir du bord supérieur du boîtier 1. La protubérance latérale 17 forme également un organe de préhension. Le boîtier 1 présente une protubérance latérale 18 logeant un dispositif de monte et baisse 6 du panier de cuisson 3. La protubérance latérale 18 s'étend sur toute la hauteur du boîtier 1. Tel que visible sur la figure 2, le boîtier 1 comporte une coque inférieure extérieure 11 et une coque supérieure intérieure 12.

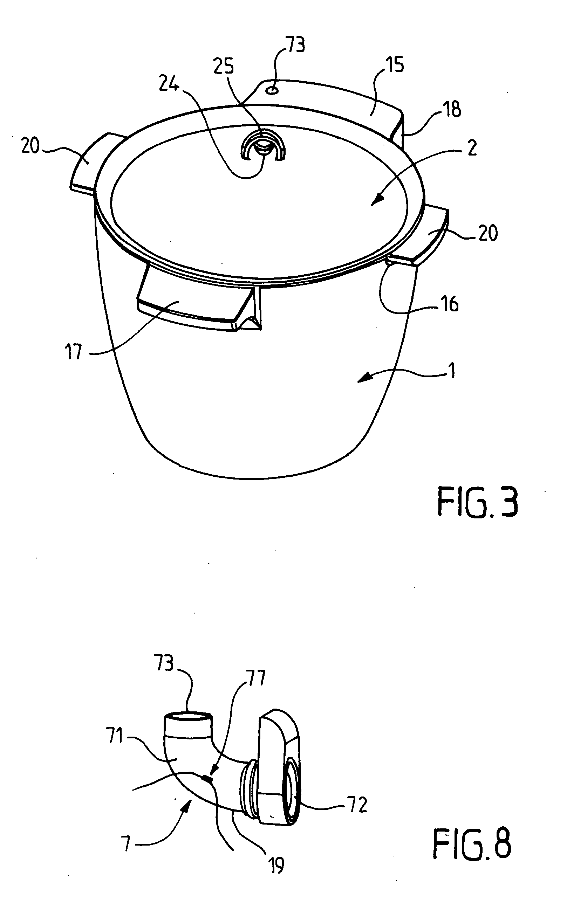

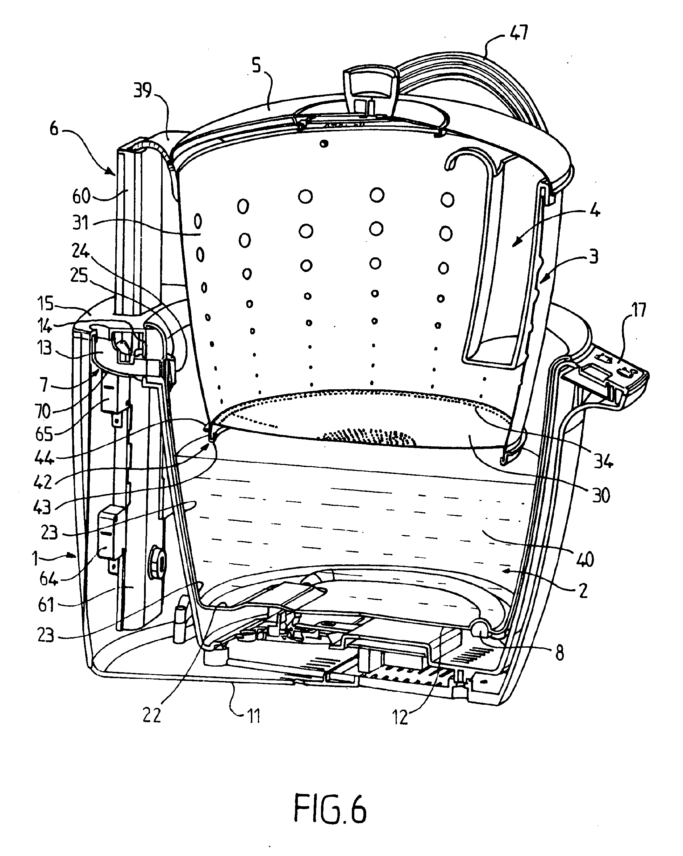

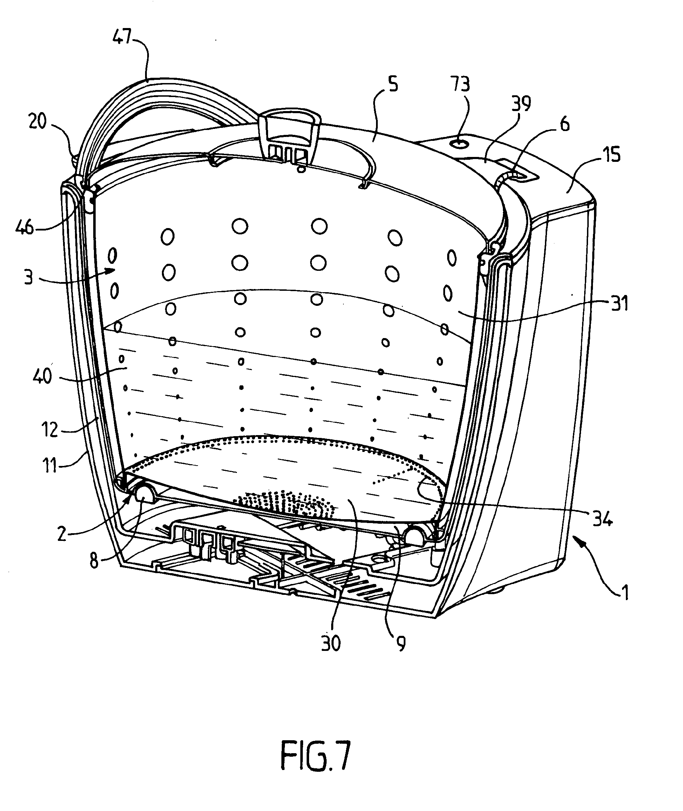

La cuve 2 comporte des poignées 20. La cuve comporte un corps 21 présentant un fond 22 et une paroi latérale 23. Le corps 21 de la cuve 2 est par exemple réalisé en aluminium revêtu. Les poignées 20 sont montées sur le corps 21. Tel que montré à la figure 3, la cuve 2 est montée dans le boîtier 1. Plus particulièrement, la cuve 2 est montée amovible dans le boîtier 1. La cuve 2 est associée à des moyens de chauffe 8. Tel que montré à la figure 2, les moyens de chauffe 8 sont agencés sous la cuve 2. La cuve 2 est prévue pour recevoir un bain de cuisson 40 visible sur les figures 6 et 7. Le bain de cuisson 40 placé dans la cuve 2 est susceptible d'être porté à ébullition par les moyens de chauffe 8.

Le panier de cuisson 3 est agencé dans la cuve 2. Le panier de cuisson 3 est associé au dispositif de monte et baisse 6. Le panier de cuisson 3 est monté mobile entre une position relevée, illustrée à la figure 6, et une position abaissée, illustrée aux figures 2 et 7. Le panier de cuisson 3 est par exemple réalisé en acier inoxydable.

Le panier de cuisson 3 présente un bord périphérique supérieur 32 agencé à l'intérieur de la cuve 2 lorsque le panier de cuisson 3 est en position abaissée dans la cuve 2, tel que montré à la figure 2. Le panier de cuisson 3 en position relevée est agencé partiellement à l'intérieur de la cuve 2, tel que montré à la figure 6.

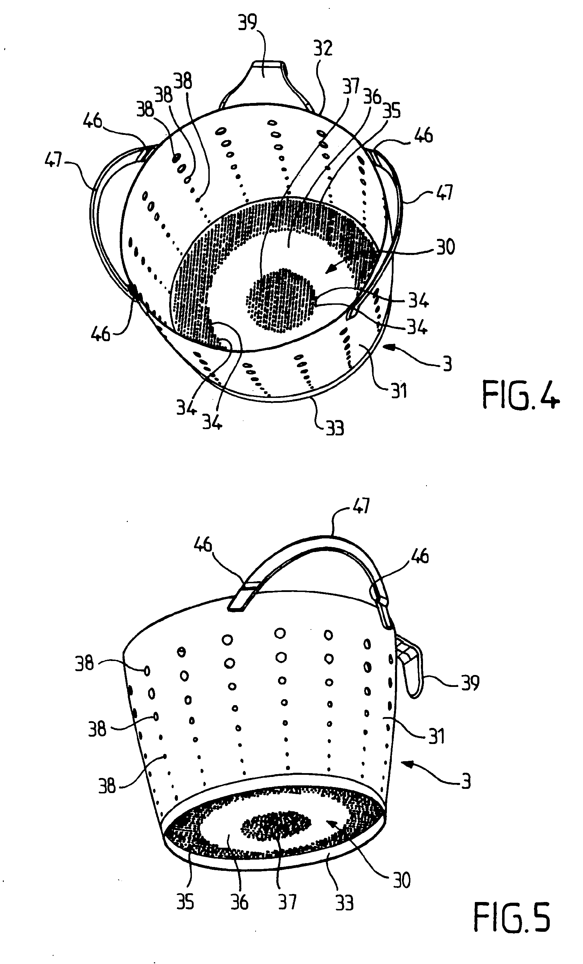

Tel que mieux visible aux figures 4 et 5, le panier de cuisson 3 présente un fond ajouré 30. Le panier de cuisson 3 comporte une paroi latérale perforée 31. La paroi latérale perforée 31 présente des ouvertures latérales 38. La taille des ouvertures latérales 38 augmente du bas vers le haut du panier de cuisson 3. Le panier de cuisson 3 comporte un organe d'accrochage 39 prévu pour coopérer avec le dispositif de monte et baisse 6.

Plus particulièrement, le fond ajouré 30 comporte des ouvertures 34. Seule une partie des ouvertures 34 a été représentée sur les figures 2, 6 et 7. La largeur des ouvertures 34 est de préférence comprise entre 1 et 2 mm, pour assurer un passage de vapeur suffisant, tout en empêchant le passage de pâtes telles que les spaghetti. Le fond ajouré 30 présente une zone périphérique 35 pourvue d'ouvertures 34. La zone périphérique 35 n'est toutefois pas nécessairement immédiatement adjacente à la paroi latérale perforée 31. La zone périphérique 35 comporte par exemple une densité d'ouvertures 34 comprise entre 15 et 20%. La zone périphérique 35 entoure une zone intermédiaire 36 moins dense en ouvertures. Plus particulièrement la zone intermédiaire 36 est dépourvue d'ouvertures. La zone intermédiaire 36 est relevée en direction de la zone périphérique 35. Le fond ajouré 30 présente une zone centrale 37 pourvue d'ouvertures 34. La zone centrale 37 comporte par exemple aussi une densité d'ouvertures 34 comprise entre 15 et 20%. La zone périphérique 35, la zone intermédiaire 36 et la zone centrale 37 sont représentées schématiquement sur les figures 4 et 5.

Tel que mieux visible sur la figure 2, le fond ajouré 30 est bombé vers le bas. Le fond ajouré 30 présente par exemple un rayon d de l'ordre de 80 cm. Le panier de cuisson 3 comporte une paroi périphérique 33 entourant le fond ajouré 30. Le panier de cuisson 3 en position abaissée dans la cuve 2 délimite avec la cuve 2 une chambre d'ébullition 9 sous le fond ajouré 30. Le panier de cuisson 3 repose sur la cuve 2. Plus particulièrement, le panier de cuisson 3 repose sur le fond 22 de la cuve 2. La paroi périphérique 33 porte un joint 42 prévu pour prendre appui contre la cuve 2. Le joint 42 présente une section en U enserrant la paroi périphérique 33. Le joint 42 présente une base 43 prévue pour reposer sur le fond 22 de la cuve 2. Le joint 42 présente une lèvre externe 44 prévue pour prendre appui contre la paroi latérale 23 de la cuve 2. Le joint 42 permet de limiter les fuites de vapeur entre la cuve 2 et le panier de cuisson 3. Le joint 42 permet aussi d'éviter de rayer la cuve 2 avec le panier de cuisson 3.

Les moyens de chauffe 8 sont agencés en dessous de la chambre d'ébullition 9. La puissance des moyens de chauffe 8 est par exemple de l'ordre de 2000 W. Plus particulièrement, les moyens de chauffe 8 sont agencés en dessous de la zone périphérique 35. Les moyens de chauffe 8 sont formés par un élément chauffant blindé 28 rapporté sous le fond de la cuve 2. Les moyens de chauffe 8 coopèrent avec un connecteur 29 agencé dans le boîtier 1.

L'accessoire à sauces 4 est accroché sur le bord périphérique supérieur 32 du panier de cuisson 3, pour permettre le réchauffage voire la cuisson de sauces lors de la cuisson des aliments placés dans le panier de cuisson 3. L'accessoire à sauces 4 peut notamment être réalisé en matière plastique.

Le couvercle 5 comporte un corps principal 50 présentant une ouverture supérieure 51 et un corps secondaire 52 muni d'un organe de préhension 53, tel que mieux visible sur la figure 1. Le corps secondaire 52 est amovible et est prévu pour fermer l'ouverture supérieure 51. Le corps principal 50 et le corps secondaire 52 sont par exemple réalisés en acier inoxydable.

Le couvercle 5 est agencé sur le panier de cuisson 3. Le couvercle 5 couvre le panier de cuisson 3. Le couvercle 5 s'étend à distance du bord périphérique supérieur 32 du panier de cuisson 3. Plus particulièrement, le couvercle 5 repose sur des supports 46 issus du panier de cuisson 3. Les supports 46 forment des moyens de préhension 47. Ainsi le couvercle 5 est supporté par le panier de cuisson 3, de manière indirecte par l'intermédiaire des supports 46.

Le couvercle 5 présente une paroi inférieure 54 ayant une partie périphérique inclinée vers le bas en direction de la périphérie. Le couvercle 5 comporte un bord périphérique inférieur 55 s'étendant à l'extérieur du panier de cuisson 3. Le bord périphérique inférieur 55 est disposé à une distance h au dessus du bord périphérique supérieur 32 du panier de cuisson 3. La distance h est par exemple comprise entre 1 et 2 mm. Le bord périphérique inférieur 55 est disposé à une distance r à l'extérieur du bord périphérique supérieur 32 du panier de cuisson 3. La distance r est par exemple comprise entre 2 et 5 mm. Le bord périphérique inférieur 55 du couvercle 5 descend à l'intérieur de la cuve 2 lorsque le couvercle 5 est agencé sur le panier de cuisson 3 en place dans la cuve pour la cuisson, tel que visible sur la figure 2. Le panier de cuisson 3 est alors en position abaissée dans la cuve 2. Le bord périphérique inférieur 55 prolonge la paroi inférieure 54.

Le couvercle 5 agencé sur le panier de cuisson 3 ménage un passage 56 avec le panier de cuisson 3. La section du passage 56 dépend de la distance h et de la distance r. Le couvercle 5 agencé sur le panier de cuisson 3 ménage un passage extérieur 57 avec la cuve 2 lorsque le panier de cuisson 3 occupe la position abaissée dans la cuve 2. Le passage 56 s'étend de manière périphérique. Seuls les supports 46 et l'organe d'accrochage 39 limitent la section du passage 56 entre le couvercle 5 et le panier de cuisson 3.

Le dispositif de monte et baisse 6 comporte un organe d'entraînement 60 mobile par rapport au boîtier 1. L'organe d'entraînement 60 est monté dans une glissière 61 solidaire du boîtier 1. L'organe d'entraînement 60 comporte une crémaillère 62 entraînée par un moteur 63. L'organe d'accrochage 39 du panier de cuisson 3 est monté de manière amovible sur l'organe d'entraînement 60. L'organe d'entraînement 60 active un détecteur de fin de course inférieur 64 lors de la descente du panier de cuisson 3, et un détecteur de fin de course supérieur 65 lors de la remontée du panier de cuisson 3. Le détecteur de fin de course inférieur 64 et le détecteur de fin de course supérieur 65, visibles sur la figure 6, sont par exemple formés par des interrupteurs.

Le cuiseur comporte un dispositif de maintien 66 prévu pour bloquer le panier de cuisson 3 en position abaissée dans la cuve 2 lors de la cuisson, afin d'éviter que la vapeur s'échappe de la chambre d'ébullition en dehors des ouvertures 34. Plus particulièrement, le dispositif de maintien 66 est formé par le dispositif de monte et baisse 6 du panier de cuisson 3. Le moteur 63 bloque la crémaillère 62 portée par l'organe d'entraînement 60. Les efforts exercés par la vapeur générée dans la chambre d'ébullition 9 exercent un couple incompatible avec l'extraction de l'organe d'accrochage 39 de l'organe d'entraînement 60. Le panier de cuisson 3 est maintenu en position abaissée sur le fond 22 de la cuve 2. Toutefois le dispositif de maintien 66 peut présenter une certaine élasticité de manière à laisser échapper de la vapeur entre le panier de cuisson 3 et la cuve 2 lorsque l'effort exercé par la vapeur est trop important.

Un dispositif de détection de vapeur 7 est prévu pour commander la descente du panier de cuisson 3 dans la cuve 2. A cet effet, la paroi latérale 23 de la cuve 2 présente une ouverture de détection de vapeur 24 agencée au niveau du panier de cuisson 3 occupant une position relevée, tel que visible sur la figure 6. La section de l'ouverture de détection de vapeur 24 correspond de préférence à un diamètre compris entre 10 et 20 mm. La paroi latérale 23 comporte une conformation interne 25 surplombant l'ouverture de détection de vapeur 24. La conformation interne 25 s'étend de préférence de part et d'autre de l'ouverture de détection de vapeur 24, et obture partiellement l'espace compris entre le panier de cuisson 3 en position relevée et la cuve 2.

L'ouverture de détection de vapeur 24 communique avec une chambre 13. Le dispositif de détection de vapeur 7 est susceptible d'être activé par la vapeur circulant dans la chambre 13 pour commander la descente du panier de cuisson 3 dans la cuve 2. La chambre 13 est agencée dans le boîtier 1. La chambre 13 débouche dans une paroi latérale 14 du boîtier 1 en regard de l'ouverture de détection de vapeur 24. La chambre 13 débouche à l'extérieur du cuiseur, dans une paroi supérieure 15 du boîtier 1. La paroi latérale 14 et la paroi supérieure 15 appartiennent à la coque supérieure intérieure 12 du boîtier 1.

Tel que visible aux figures 6 et 8, la chambre 13 est formée par un conduit 70. Le dispositif de détection de vapeur 7 comporte un capteur de température 77, visible sur la figure 8. Le capteur de température 77 est par exemple une résistance de type CTN. Le capteur de température 77 est agencé à l'extérieur du conduit 70. Le capteur de température 77 est monté contre une paroi 71 du conduit 70. La paroi 71 du conduit 70 est avantageusement amincie au niveau du capteur de température 77. Le conduit 70 présente une extrémité latérale 72 prévue pour être placée en regard de l'ouverture de détection de vapeur 24 de la cuve 2 placée dans le boîtier 1. Le conduit 70 présente une extrémité supérieure 73 débouchant dans une ouverture de la paroi supérieure 15. Le conduit 70 est ascendant. Plus particulièrement, le conduit 70 est oblique et coudé vers le haut, pour faciliter l'échappement de la vapeur.

Le capteur de température 77 est associé à un dispositif de commande prévu pour alimenter le moteur 63 lorsque la température seuil est détectée afin de descendre le panier de cuisson 3 en position abaissée. Le dispositif de commande comporte également un minuteur réglable par l'utilisateur. Le dispositif de commande est prévu pour alimenter le moteur 63 lorsque le temps programmé est écoulé, afin de remonter le panier de cuisson 3 en position relevée.

Le fonctionnement du cuiseur est le suivant.

Le positionnement correct de la cuve 2 dans le boîtier 1 est obtenu par la mise en place des poignées 20 dans les échancrures 16, possible seulement dans la position permettant l'alimentation des moyens de chauffe 8 par le connecteur 29. L'utilisateur remplit la cuve 2 de la quantité de bain de cuisson souhaitée, par exemple de l'eau avec des aromates, et place les aliments à cuire dans le panier de cuisson 3 en position relevée. Pour la cuisson de pâtes, une proportion de 3 litres d'eau pour 500 g de pâtes sèches peut suffire, alors que la quantité d'eau usuelle est de 5 litres d'eau pour 500 g de pâtes sèches. L'utilisateur met en marche le cuiseur après avoir sélectionné une durée de cuisson. Les moyens de chauffe 8 portent le bain de cuisson 40 à ébullition. De la vapeur monte entre la cuve 2 et le panier de cuisson 3. Le dispositif de détection de vapeur 7 détecte la vapeur circulant dans la chambre 13 pour commander la descente du panier de cuisson 3 dans la cuve 2. Si désiré, le dispositif de chauffe peut continuer à alimenter les moyens de chauffe à pleine puissance puis alimenter les moyens de chauffe 8 à puissance réduite. La vapeur produite dans la chambre d'ébullition 9, notamment lors de la chauffe à pleine puissance, permet d'agiter les aliments pendant la cuisson. Le collage des aliments sur la paroi latérale ajourée 31 du panier de cuisson 3 et le collage des aliments entre eux peut ainsi être évité. Le chauffage à pleine puissance après la descente du panier de cuisson 3 dans la cuve 2 permet de ramollir plus rapidement le pied de spaghetti non coupés introduits par l'ouverture supérieure 51 du couvercle 5. La descente des spaghetti dans le panier de cuisson 3 est ainsi facilitée. Le couvercle 5 permet d'éviter les projections du bain de cuisson et de limiter la formation de mousse, grâce au bord périphérique inférieur 55 et au passage 56. Les aliments sont cuits pendant la durée indiquée. Lorsque la durée de cuisson est écoulée, le panier de cuisson 3 est remonté. Le cuiseur permet une cuisson automatique. La cuisson peut être effectuée sans surveillance. Une phase de maintien au chaud peut être prévue, par exemple en alternant des périodes dans lesquelles le panier de cuisson 3 est en position relevée et des périodes dans lesquelles le panier de cuisson 3 est en position abaissée dans la cuve 2. Si désiré, les moyens de chauffe 8 peuvent être alimentés par intermittence, notamment après la descente du panier de cuisson 3 dans la cuve 2 et/ou pendant la phase de maintien au chaud.

Plus particulièrement selon l'invention, le passage 56 ménagé entre le panier de cuisson 3 et le couvercle 5 favorise l'échappement de la vapeur lors de la cuisson, ce qui permet de limiter la formation de mousse, notamment lors d'un fonctionnement à pleine puissance. De plus le couvercle 5 permet un recouvrement complet du panier de cuisson 3 et permet d'éviter les projections d'eau bouillante sur les côtés, du fait que le panier de cuisson 3 en position basse est logé entièrement à l'intérieur de la cuve 2 et que le bord périphérique inférieur 55 du couvercle 5 est agencé à l'intérieur de la cuve 2. Après la cuisson, par exemple lors de la phase de maintien au chaud, le couvercle 5 permet de limiter la déperdition de chaleur des aliments placés dans le panier de cuisson 3, notamment lorsque le panier de cuisson 3 est en position relevée.

A titre de variante, la paroi périphérique 33 du panier de cuisson 3 peut reposer directement sur la cuve 2.

A titre de variante, le panier de cuisson 3 ne repose pas nécessairement sur le fond de la cuve 2, mais peut notamment reposer contre la paroi latérale de la cuve 2 ou contre un épaulement de la cuve 2.

A titre de variante, la paroi périphérique 33 du panier de cuisson 3 n'est pas nécessairement inférieure, mais peut notamment être latérale.

A titre de variante, la cuve 2 peut être montée fixe dans le boîtier 1.

A titre de variante, le cuiseur peut être dépourvu de boîtier logeant la cuve 2.

A titre de variante, le couvercle 5 ne repose pas nécessairement sur des supports 46 issus du panier de cuisson 3. Le couvercle 5 peut notamment reposer directement sur le panier de cuisson 3. Le couvercle 5 est alors directement supporté par le panier de cuisson 3. Le couvercle 5 peut aussi notamment être monté sur l'organe d'accrochage 39.

Lorsque le couvercle 5 est supporté par le panier de cuisson 3, directement ou indirectement, l'utilisateur peut retirer du cuiseur le panier de cuisson 3 supportant le couvercle 5.

A titre de variante, le couvercle 5 ne repose pas nécessairement sur le panier de cuisson 3. En d'autres termes, le couvercle 5 n'est pas nécessairement supporté, directement et/ou indirectement, par le panier de cuisson 3. Le couvercle 5 peut notamment être monté sur le dispositif de monte et baisse 6.

Lorsque le couvercle 5 est monté sur le dispositif de monte et baisse 6, l'utilisateur doit d'abord retirer le couvercle 5 avant de pouvoir retirer le panier de cuisson 3.

A titre de variante, le dispositif de maintien 66 du panier de cuisson 3 n'est pas nécessairement formé par un dispositif de monte et baisse du panier de cuisson. Le dispositif de maintien peut comporter des éléments de retenue disposés dans la cuve et/ou à l'extérieur de la cuve. Par exemple la cuve et le panier de cuisson peuvent présenter un système de verrouillage à baïonnette, ou encore un couvercle accroché sur la cuve peut maintenir le panier de cuisson dans la cuve.

A titre de variante, le cuiseur ne comporte pas nécessairement des moyens de chauffe. Le bain de cuisson peut alors être porté à ébullition par des moyens de chauffe n'appartenant pas au cuiseur.

La présente invention n'est nullement limitée à l'exemple de réalisation décrit et à ses variantes, mais englobe de nombreuses modifications dans le cadre des revendications.

## Revendications

1. Cuiseur, notamment cuiseur à pâtes, comportant une cuve (2) prévue pour recevoir un bain de cuisson susceptible d'être porté à ébullition, un panier de cuisson (3) agencé dans la cuve (2), un couvercle (5) agencé sur le panier de cuisson (3), **caractérisé en ce que** le couvercle (5) ménage un passage (56) avec le panier de cuisson (3).

2. Cuiseur selon la revendication 1, **caractérisé en ce que** le couvercle (5) couvre le panier de cuisson (3).

3. Cuiseur selon l'une des revendications 1 ou 2, **caractérisé en ce que** le panier de cuisson (3) présente un bord périphérique supérieur (32) agencé à l'intérieur de la cuve (2).

4. Cuiseur selon l'une des revendications 1 ou 2, **caractérisé en ce que** couvercle (5) s'étend à distance d'un bord périphérique supérieur (32) du panier de cuisson (3).

5. Cuiseur selon l'une des revendications 1 à 4, **caractérisé en ce que** le couvercle (5) repose sur des supports (46) issus du panier de cuisson (3).

6. Cuiseur selon la revendication 5, **caractérisé en ce que** les supports (46) forment des moyens de préhension (47).

7. Cuiseur selon l'une des revendications 1 à 6, **caractérisé en ce que** le couvercle (5) présente une paroi inférieure (54) ayant une partie périphérique inclinée vers le bas en direction de la périphérie.

8. Cuiseur selon l'une des revendications 1 à 7, **caractérisé en ce que** le couvercle (5) comporte un bord périphérique inférieur (55) s'étendant à l'extérieur du panier de cuisson (3).

9. Cuiseur selon la revendication 8, **caractérisé en ce que** le bord périphérique inférieur (55) du couvercle (5) descend à l'intérieur de la cuve (2).

10. Cuiseur selon l'une des revendications 1 à 9, **caractérisé en ce que** le couvercle (5) comporte un corps principal (50) présentant une ouverture supérieure (51) et un corps secondaire (52) prévu pour fermer l'ouverture supérieure (51).

11. Cuiseur selon l'une des revendications 1 à 10, **caractérisé en ce que** le panier de cuisson (3) comporte une paroi latérale perforée (31).

12. Cuiseur selon l'une des revendications 1 à 11, **caractérisé en ce que** la cuve (2) est montée dans un boîtier (1).

13. Cuiseur selon la revendication 12, **caractérisé en ce que** la cuve (2) est montée amovible dans le boîtier (1).

14. Cuiseur selon l'une des revendications 1 à 13, **caractérisé en ce que** le panier de cuisson (3) présente un fond ajouré (30), le panier de cuisson (3) délimitant avec la cuve (2) une chambre d'ébullition (9) sous le fond ajouré (30).

15. Cuiseur selon la revendication 14, **caractérisé en ce qu'**il comporte un dispositif de maintien (66) prévu pour bloquer le panier de cuisson (3) dans la cuve (2) lors de la cuisson (1).

16. Cuiseur selon l'une des revendications 1 à 15, **caractérisé en ce que** la cuve (2) est associée à des moyens de chauffe (8).

17. Cuiseur selon les revendications 15 et 16, **caractérisé en ce que** les moyens de chauffe (8) sont agencés en dessous de la chambre d'ébullition (9).

18. Cuiseur selon l'une des revendications 1 à 17, **caractérisé en ce que** le couvercle (5) est supporté par le panier de cuisson (3).

19. Cuiseur selon l'une des revendications 1 à 18, **caractérisé en ce que** le couvercle est monté sur un dispositif de monte et baisse (6) du panier de cuisson (3).
